# EUROPÄISCHE PATENTSCHRIFT

(11) **EP 2 327 140 B1**
(45) Veröffentlichungstag und Bekanntmachung des Hinweises auf die Patenterteilung: **08.04.2015**
(21) Anmeldenummer: 09780746.5
(22) Anmeldetag: 17.07.2009
(51) Int. Cl.: H02K 13/10, H02K 5/14, H02K 11/02, H02K 23/20

(54) **SECHSPOLIGE GLEICHSTROMMASCHINE**
SIX-POLE DC ELECTRIC MACHINE
MACHINE HEXAPOLAIRE À COURANT CONTINU

(30) Priorität: 17.09.2008 DE 102008042156
(43) Veröffentlichungstag der Anmeldung: 01.06.2011
(73) Patentinhaber: Robert Bosch GmbH, 70442 Stuttgart (DE)
(72) Erfinder: ROOS, Gerald, 77855 Sasbachried (DE)
(86) Internationale Anmeldenummer: PCT/EP2009/059197
(87) Internationale Veröffentlichungsnummer: WO 2010/031610

(56) Entgegenhaltungen:
- WO-A1-2007/104589
- WO-A1-2008/062791
- FR-A1- 2 797 110
- US-A- 2 645 731
- US-A- 3 648 090

## Beschreibung

### Stand der Technik

Die Erfindung geht aus von einer sechspoligen Gleichstrommaschine, insbesondere von einem sechspoligen Gleichstrommotor für den Einsatz in einem Kraftfahrzeug, welche einen vorzugsweise permanentmagnetisch erregten Stator und einen drehbar in einem Polgehäuse gelagerten Rotor mit einer Wellenwicklung aufweist. Derartige Maschinen sind grundsätzlich bekannt, beispielsweise in der Anwendung als Startermotoren für Kraftfahrzeuge.

Weiterhin ist aus der Patentanmeldung EP 0359603 A eine sechspolige Gleichstrommaschine mit einer über vier Bürsten gespeisten Rotorwicklung bekannt, deren gleichpolige Bürsten unter einem Winkel von vorzugsweise 120° angeordnet sind, während die Bürsten mit unterschiedlichen Potentialen einen Winkel von vorzugsweise 60° einschleißen. Hierbei liegen jeweils zwei Bürsten am Kommutator diametral gegenüber, so dass sich trotz einer Anordnung von vier Bürsten nur zwei Kommututierungszeitpunkte für die Rotorwicklung ergeben.

Mit der WO 2008/062791 A1 ist ein sechspoliger DC-Motor bekannt geworden, bei dem auf einen Bürstenträger Bürsten angeordnet sind, die einen Kommutator elektrisch kontaktieren. Dabei sind beispielsweise zwei Bürsten in einem Winkelabstand von 60° angeordnet, wobei der Kommutator neun Kommutatorlamellen aufweist. Die WO 2007/104589 A1 zeigt ebenfalls eine elektrische Maschine, bei der beispielsweise ein Kommutator zehn Lamellen aufweist, und zwei Bürsten in einem Winkelabstand von 180° angeordnet sind. In der US 3,648,090 A ist ein elektrischer Dynamo dargestellt, bei dem beispielsweise vier Bürsten in einem Winkelabstand von 60° zueinander auf einem Bürstenhalter angeordnet sind. Die US 2,645,731 A zeigt einen elektrischen Generator der einen Kommutator aufweist, an dem sechs Bürsten mit unterschiedlichen Winkelabständen zueinander anliegen.

### Offenbarung der Erfindung

Die erfindungsgemäße sechspolige Gleichstrommaschine mit den Merkmalen des unabhängigen Anspruchs hat den Vorteil, dass bei grundsätzlich bereits reduzierter Baugröße der Maschine durch die sechspolige Ausführung bei gleichzeitiger Verkleinerung des Bürstenapparates die Kosten der Maschine reduziert werden können, wobei durch die spezielle Anordnung der Bürsten die Welligkeit des Motorstromes und die Momentenwelligkeit sowie die hierdurch erzeugten Geräuschanregungen und elektromagnetischen Störungen deutlich verringert werden bei gleichzeitiger Standzeiterhöhung der Maschine.

Besonders vorteilhaft ist es, wenn der Kommutator der Maschine eine gerade Anzahl von Lamellen aufweist, welche insbesondere der doppelten Anzahl der Rotornuten entspricht.

Durch die Reduzierung der Bürstenzahl auf eine Anordnung mit nur zwei Bürsten erhält man dabei den größten Vorteil hinsichtlich der Fertigungskosten und der Einsparung von Bauraum. Mit einer erfindungsgemäßen Anordnung von drei oder vier Bürsten und der hierdurch erreichten Erhöhung der Kommutierungszeitpunkte des Rotorstromes auf drei kann mit verhältnismäßig geringem Mehraufwand bei ebenfalls gegenüber einer Vollbestückung der Bürstenanordnung deutlich reduzierten Kosten und verringertem Platzbedarf die Welligkeit des Motorstromes noch weiter reduziert und näherungsweise der geringstmöglichen Welligkeit des Motorstromes bei einer Bestückung mit sechs Bürsten angeglichen werden. Die Verringerung der Bürstenzahl und deren Querschnitt muss jeweils der Strombelastung der Bürsten Rechnung tragen.

Erfindungsgemäß weist der Bürstenträger in einem Sektor von cirka 180° vier Halterungen für die Aufnahme von Bürstenköchern auf, die applikationsabhängig wahlweise mit zwei, drei oder vier Bürsten bestückbar sind. Hierdurch kann mit einer einzigen Ausführungsform des Bürstenträgers die Bürstenbestückung der Strombelastung der jeweiligen Baugröße angepasst und so die Teilevielfalt für die Herstellung der Maschinen reduziert werden. Vorzugsweise sind dabei alle Bürsten in einem ersten Sektor des Bürstenträgers und erforderliche elektrische Entstörmittel außerhalb dieses Sektors angeordnet, wobei die bereits entstörten elektrischen Verbindungen außerhalb des von den Bürsten eingenommenen Sektors des Bürstenträgers verlaufen und so eine erneute Einstreuung von Störungen in die bereits entstörten Leistungen vermieden wird.

Hinsichtlich der Gestaltung der Rotors ist es vorteilhaft, wenn dieser mit zehn Einzelzähnen 21 ausgebildet und die Rotorwicklung als Einzelzahnwicklung ausgeführt wird. Hierdurch erhält man eine gute Ausnutzung des Rotoreisen und eine Wirkungsgradverbesserung der Maschine.

Weitere Einzelheiten und Ausgestaltungen der Erfindung ergeben sich aus den Patentansprüchen und der Beschreibung der Ausführungsbeispiele der Erfindung.

### Kurze Beschreibung der Zeichnungen

Ausführungsbeispiele der Erfindung sind in den Zeichnungen dargestellt und in der nachfolgenden Beschreibung näher erläutert.

Es zeigen:
- Figur 1: eine Schnittdarstellung der erfindungsgemäßen Gleichstrommaschine,
- Figur 2: eine schematisierte Darstellung eines über zwei Bürsten bestromten Rotors mit den zugehörigen Stromkennlinien,
- Figur 3: eine schematisierte Darstellung eines über drei Bürsten bestromten Rotors mit den zugehörigen Stromkennlinien,
- Figur 4: eine schematisierte Darstellung eines über vier Bürsten bestromten Rotors mit den zugehörigen Stromkennlinien und
- Figur 5: eine Ansicht eines mit drei Bürsten und Entstörkomponenten bestückten Bürstenträgers der erfindungsgemäßen Maschine.

### Ausführungsformen der Erfindung

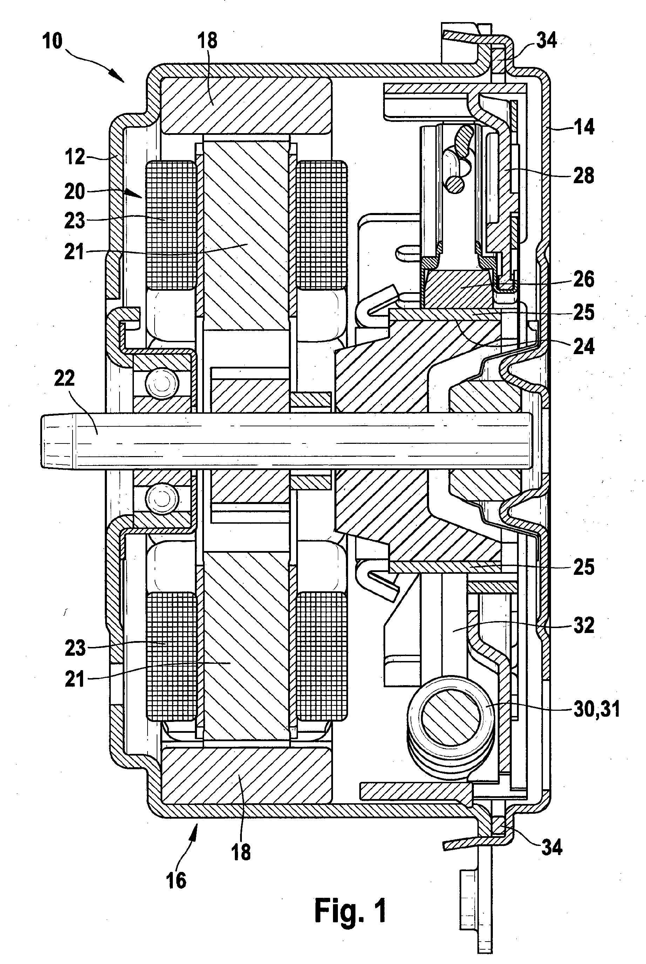

In Figur 1 ist mit 10 eine sechspolige Gleichstrommaschine bezeichnet in der Ausführung als Antriebsmotor für das Kühlgebläse eines Kraftfahrzeuges. Die Maschine besitzt ein topfförmiges Polgehäuse 12, welches durch einen Lagerdeckel 14 einseitig geschlossen ist. Innerhalb des Polgehäuses 12 wird ein Stator 16 durch sechs Permanentmagnete 18 ausgebildet, welche am Polgehäuse 12 in bekannter Weise befestigt sind. Ein Rotor 20 der Maschine mit Einzelzähnen 21 sitzt auf einer Welle 22, welche einerseits im Polgehäuse 12 und andererseits im Lagerdeckel 14 drehbar gelagert ist.

Auf der Rotorwelle 22 ist weiterhin ein Kommutator 24 mit Lamellen 25 und Schlitzen 27 angeordnet, welchem über Bürsten 26 der Erregerstrom für die Einzelzahnspulen einer Wellenwicklung 23 zugeführt wird.

Die Bürsten 26 und weitere Komponenten, insbesondere die erforderlichen Entstörmittel der Maschine, sind auf einem Bürstenträger 28 gehalten. Von den Entstörmitteln des Motors sind in Figur 1 eine von zwei Entstördrosseln 30,31 und ein Kondensator 32 zu erkennen. Die Arretierung des Bürstenträgers 28 im Polgehäuse 12 erfolgt durch einen Befestigungsflansch 34, welcher sich über den gesamten Umfang des Bürstenträgers erstreckt und zwischen dem Polgehäuse 12 und dem Lagerdeckel 14 im fertig montierten Zustand der Maschine eingeklemmt ist. Im Einzelnen wird der Aufbau des Bürstenträgers 28 und die Anordnung der Bürsten an Hand der folgenden Figuren erläutert, in denen für gleiche Teile gleiche Bezugszeichen verwendet sind.

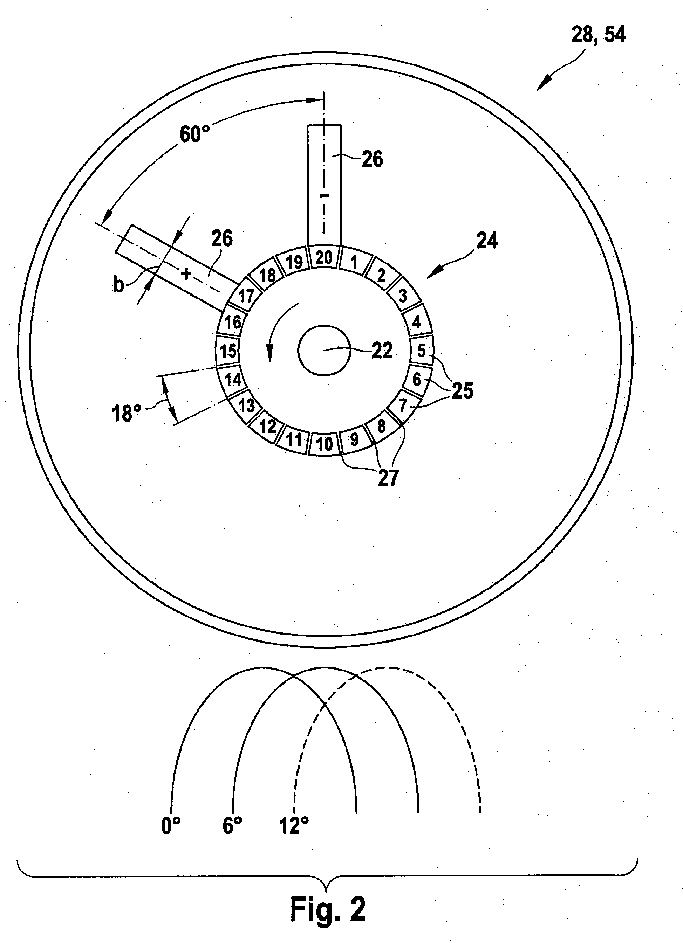

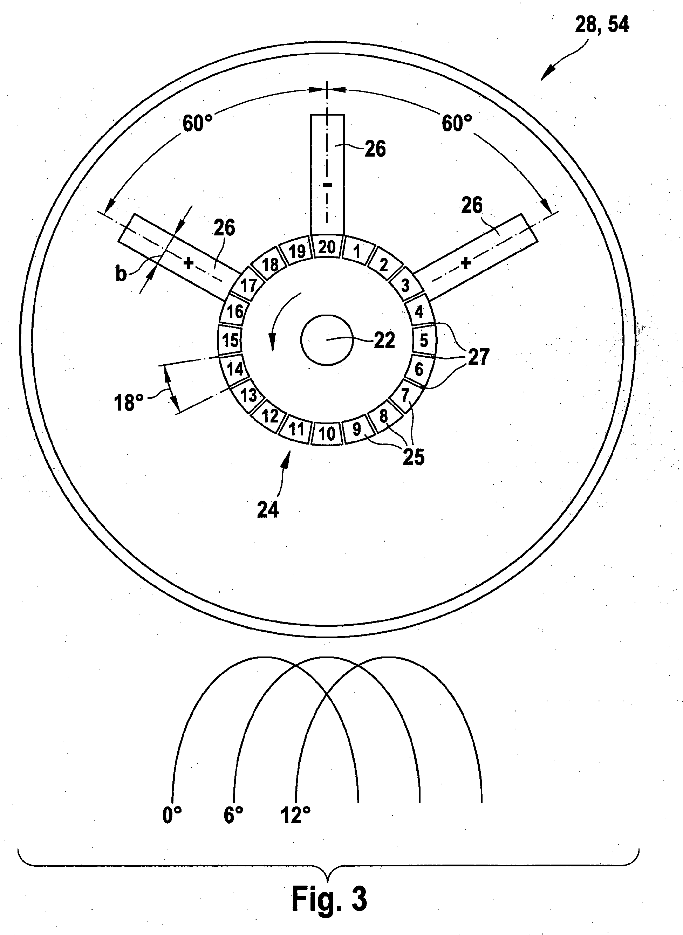

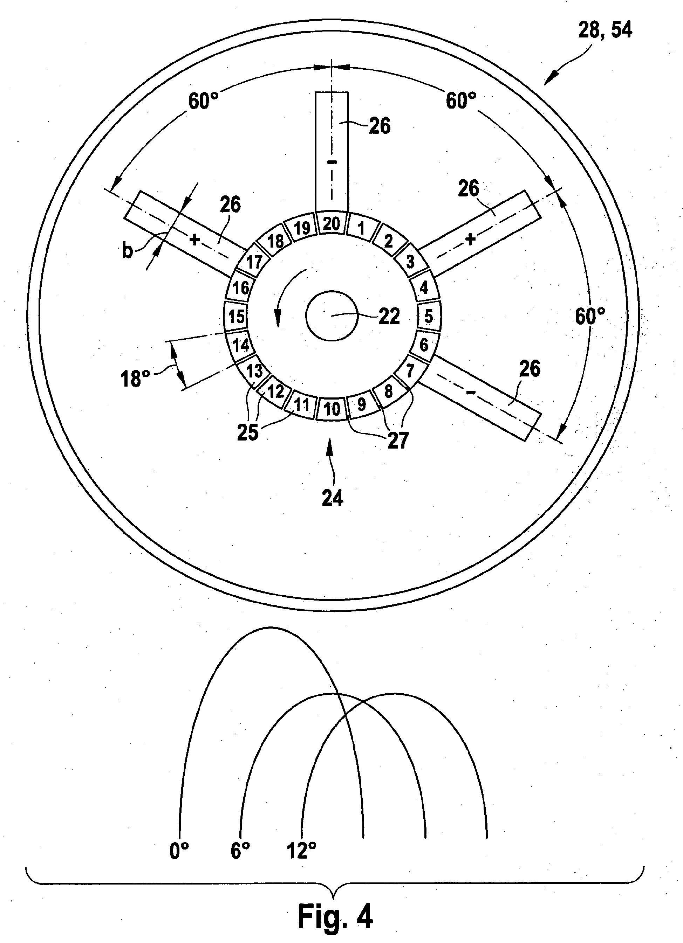

Die Figuren 2 bis 4 zeigen in schematisierten Darstellungen den Bürstenträger 28 der erfindungsgemäßen Gleichstrommaschine mit den Bürsten 26 und dem Kommutator 24. In allen drei Ausführungsformen sind die Bürsten 26 bei einer Toleranz von +/-5° mit einem Winkelabstand von jeweils cirka 60° zueinander angeordnet. Die Stromzuführung zum Kommutator 24 erfolgt in Figur 2 über zwei Bürsten, in Figur 3 über drei Bürsten und in Figur 4 über vier Bürsten. Die Bürsten 26 haben jeweils eine Breite b, die geringfügig schmäler ist als die Oberflächenbreite der Kommutatorlamellen 1 bis 20. Alle drei Ausführungsformen haben die gleiche Anzahl von jeweils zwanzig Kommutatorlamellen 25 bei zehn Rotorzähnen 21. Erfindungsgemäß ist die Bürstenzahl jeweils kleiner als die bei einer sechspoligen Gleichstrommaschine mit Wellenwicklung bei Vollbestückung vorhandene Anzahl von sechs Bürsten, wobei jedoch die Stromwelligkeit sowie die hierdurch bedingte Momentenwelligkeit und die entstehenden Geräuschanregungen deutlich geringer sind als bei bekannten Bestückungen einer sechspoligen Maschine mit zwei oder vier Bürsten, welche einander am Kommutator diametral gegenüber liegen.

Der Stromverlauf in den Rotorspulen ist ebenfalls schematisiert in den Darstellungen rechts neben den Bürstenanordnungen der Figuren 2, 3 und 4 dargestellt. Aus dem Kurveriverlauf ist ersichtlich, dass bei der Anordnung gemäß Figur 2 mit zwei unter einem Winkel von 60° zueinander angeordneten Bürsten im Bereich einer Lamellenteilung von 18° nur zwei Kominutierungen erfolgen, während bei der Verwendung von drei oder vier Bürsten in den Figuren 3 und 4 in diesem Bereich drei Kommutierungen stattfinden, und zwar in einem Abstand von jeweils 6° am Kommutatorumfang. Die fehlende Halbwelle des Stromes bei der Anordnung gemäß Figur 2 ist durch eine gestrichelte Linie angedeutet. Im Gegensatz zu zwei diametral gegenüber liegenden Bürsten mit gleicher Positionierung zu den Kommutatorschlitzen 27 erfolgen hierbei jedoch zwei Kommutierungen anstelle einer einzigen Kommutierung im Bereich einer Lamellenteilung, weshalb die resultierende Stromwelligkeit gegenüber der bekannten diametralen Anordnung von zwei Bürsten mit einem Kommutierungszeitpunkt pro Lamellenteilung deutlich geringer ist.

Bei den erfindungsgemäßen Anordnungen entsprechend den Figuren 3 und 4 sind drei, beziehungsweise vier Bürsten 26 jeweils in einem Winkelabstand von cirka 60° zueinander angeordnet, welche am Umfang des Kommutators 24 drei unterschiedliche Positionen zu den Kommutatorschlitzen einnehmen, sodass im Bereich einer Lamellenteilung drei Kommutierungszeitpunkte liegen mit einer nochmals verbesserten Reduzierung der Stromwelligkeit gegenüber der Ausführungsform entsprechend Figur 2. Zusätzlich ist bei der Anordnung mit vier Bürsten entsprechend Figur 4 im Bereich eines Kommutierungsvorganges die Strombelastung in den Bürsten 26 jeweils halbiert, wodurch sich die Standzeit der Bürsten erhöht.

Weiterhin zeigen die Darstellungen in den Figuren 2 bis 4 deutlich die Reduzierung des Platzbedarfes für die Bürsten 26, wodurch Platz für die Anordnung von Entstörkomponenten 30, 31, 32 auf dem Bürstenträger 26 geschaffen wird.

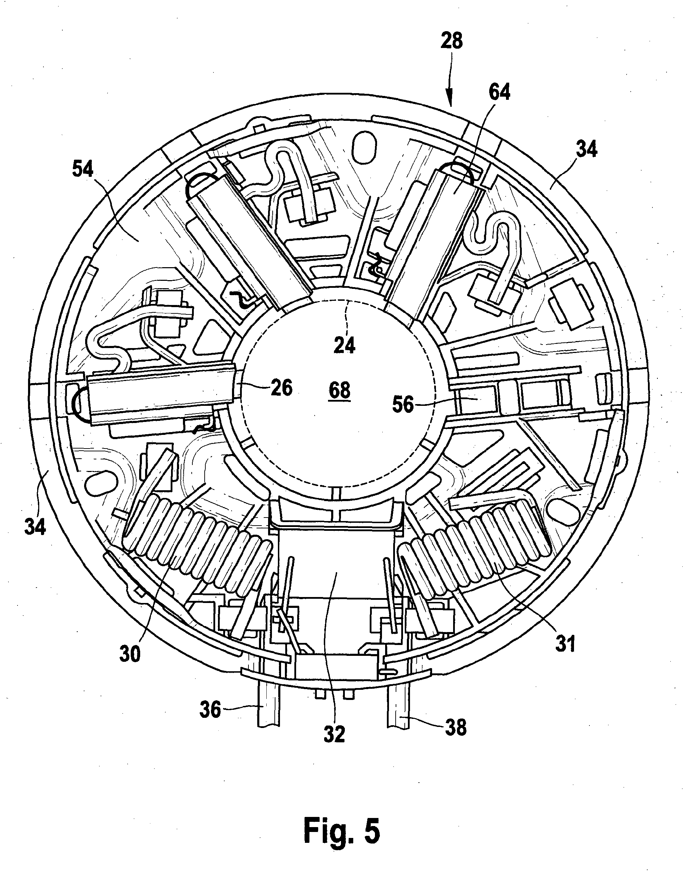

Figur 5 zeigt eine Draufsicht auf den aus Kunststoff gespritzten Bürstenträger 28. Die Stromzufuhr von einer nicht dargestellten Gleichspannungsquelle erfolgt über zwei Anschlussleitungen 36 und 38, welche einerseits mit dem positiven und andererseits mit dem negativen Pol der Gleichspannungsquelle sowie mit den Entstördrosseln 30 und 31 verbunden sind. Gleichzeitig liegt die Anschlussleitung 36 an einer Elektrode und die Anschlussleitung 38 an der anderen Elektrode des Entstörkondensators 32. Aus der Darstellung in Figur 5 ist die Anordnung der Entstörkomponenten 30, 31 und 32 auf dem Bürstenträger 28 ersichtlich. Die Bestückungshalterungen 56 für Bürstenköcher 64 sind so auf der Grundplatte 54 angeordnet, dass die Bürsten 26 in einem ersten, sich etwa über die obere Hälfte der Grundplatte 54 erstreckenden Sektor und die elektrischen Entstörmittel 30, 31, 32 in einem zweiten Sektor auf der unteren Hälfte der Grundplatte 54 liegen. Durch diese Anordnung erreicht man, dass die entstörten elektrischen Verbindungen zu den Drosseln 30 und 31 und zu dem Kondensator 32 außerhalb des von den Bürsten 26 eingenommenen oberen Sektors des Bürstenträgers 28 verlaufen und die Längsachsen der Bürsten sich nicht mit den elektrischen Verbindungen schneiden, welche zwischen den elektrischen Anschlussleitungen 36, 38 und den Entstördrosseln 30, 31 liegen. So werden in die bereits entstörten elektrischen Verbindungen von den Bürsten keine Störsignale mehr induziert, wodurch die elektromagnetische Verträglichkeit (EMV) der Maschine deutlich verbessert und Bauraum in der Maschine eingespart wird. Die Lage des Kommutators 24 ist durch eine gestrichelte Linie angedeutet.

## Patentansprüche

1. Sechspolige Gleichstrommaschine, insbesondere Gleichstrommotor für den Einsatz in einem Kraftfahrzeug, mit einem vorzugsweise permanentmagnetisch erregten Stator (16), einem drehbar in einem Polgehäuse (12) gelagerten Rotor (20) mit einer Wellenwicklung (23) und mit einem Kommutator (24), sowie mit einem Bürstenträger (28) zur Halterung der Bürsten (26) und vorzugsweise weiterer Komponenten (30,31;32), wobei die Bürstenanordnung weniger als sechs Bürsten (26) aufweist, welche am Umfang des Kommutators (24) mit einem Winkelabstand von cirka 60° zueinander angeordnet sind, und wobei der Kommutator (24) eine gerade Anzahl von Lamellen (25) aufweist, die durch Kommutatorschlitze (27) voneinander beabstandet sind, **dadurch gekennzeichnet, dass** der Bürstenträger (28) kreisförmig ausgebildet ist und in einem ersten Sektor von cirka 180° vier Halterungen (56) für die Aufnahme von Bürstenköchern (64) aufweist, die applikationsabhängig, wahlweise mit zwei, drei oder viert Bürsten bestückbar sind, und dass zwei bis vier Bürsten (26) in einem Sektor des Bürstenträgers (28) und elektrische Entstörmittel (30,31;32) in einem zweiten Sektor auf der anderen Hälfte der Bürstenträger angeordnet sind.

2. Gleichstrommaschine nach Anspruch 1, **dadurch gekennzeichnet, dass** die Bürstenahordnung drei oder vier Bürsten (26) aufweist, welche am Umfang des Kommutators (24) drei unterschiedliche Positionen zu den Kommutatorschlitzen (27) einnehmen.

3. Gleichstrommaschine nach einem der vorhergehenden Ansprüche, **dadurch gekennzeichnet, dass** entstörte elektrische Verbindungen zu den Bürsten (26) außerhalb des von den Bürsten eingenommenen Sektors des Bürstenträgeres (28) liegen.

4. Gleichstrommaschine nach einem der vorhergehenden Ansprüche, **dadurch gekennzeichnet, dass** wenigstens zwei Entstördrosseln (30,31) und wenigsten ein Entstörkondensator (32) sowie deren Anschlussleitungen (36,38) außerhalb des von den Bürsten (26) eingenommenen Sektors des Bürstenträgers (28) angeordnet sind.

5. Gleichstrommaschine nach einem der vorhergehenden Ansprüche, **dadurch gekennzeichnet, dass** die Wellenwicklung (23) des Rotors (20) als Einzelzahnwicklung ausgebildet ist.

## Claims

1. Six-pole direct-current machine, in particular a direct-current motor for use in a motor vehicle, having a stator (16) which preferably has permanent magnet excitation, having a rotor (20) which is mounted in a pole housing (12) such that it can rotate and having a wave winding (23), and having a commutator (24), as well as having a brush holder (28) for holding the brushes (26) and preferably further components (30, 31; 32), wherein the brush arrangement has less than six brushes (26), which are arranged with an angular separation of about 60° on the circumference of the commutator (24), and wherein the commutator (24) has an even number of laminates (25), which are spaced apart by commutator slots (27), **characterized in that** the brush holder (28) is circular and has four holders (56) for holding brush boxes (64) in a first sector of about 180°, which brush boxes (64) can optionally be fitted with two, three or four brushes, depending on the application and **in that** two to four brushes (26) are arranged in one sector of the brush holder (28), and electrical suppression means (30, 31; 32) are arranged in a second sector on the other half of the brush holder.

2. Direct-current machine according to Claim 1, **characterized in that** the brush arrangement has three or four brushes (26), which assume three different positions with respect to the commutator slots (27) on the circumference of the commutator (24).

3. Direct-current machine according to one of the preceding claims, **characterized in that** suppressed electrical connections for the brushes (26) are located outside that sector of the brush holder (28) which is occupied by the brushes.

4. Direct-current machine according to one of the preceding claims, **characterized in that** at least two suppression inductors (30, 31) and at least one suppression capacitor (32) as well as their connecting lines (36, 38) are arranged outside that sector of the brush holder (28) which is occupied by the brushes (26).

5. Direct-current machine according to one of the preceding claims, **characterized in that** the wave winding (23) on the rotor (20) is in the form of a single-tooth winding.

## Revendications

1. Machine hexapolaire à courant continu, en particulier moteur à courant continu pour l'utilisation dans un véhicule automobile, comprenant un stator (16) à excitation magnétique de préférence permanente, un rotor (20) monté à rotation dans un boîtier polaire (12) avec un enroulement d'arbre (23) et un collecteur (24), ainsi qu'un porte-balais (28) pour la fixation des balais (26) et de préférence d'autres composants (30, 31 ; 32), l'agencement de balais présentant moins de six balais (26) qui sont disposés sur la périphérie du collecteur (24) à une distance angulaire les uns des autres d'environ 60°, et le collecteur (24) présentant un nombre pair de lamelles (25) qui sont espacées les unes des autres par des fentes de collecteur (27), **caractérisée en ce que** le porte-balais (28) est réalisé sous forme circulaire et présente, dans un premier secteur d'environ 180°, quatre fixations (56) pour recevoir des fourreaux de balais (64), qui, en fonction de l'application, peuvent être garnis de manière sélective de deux, trois ou quatre balais, et **en ce que** deux à quatre balais (26) sont disposés dans un secteur du porte-balais (28) et des moyens d'antiparasitage électrique (30, 31 ; 32) sont disposés dans un deuxième secteur sur l'autre moitié du porte-balais.

2. Machine à courant continu selon la revendication 1, **caractérisée en ce que** l'agencement de balais présente trois ou quatre balais (26) qui prennent à la périphérie du collecteur (24) trois positions différentes par rapport aux fentes de collecteur (27).

3. Machine à courant continu selon l'une quelconque des revendications précédentes, **caractérisée en ce que** des connexions électriques déparasitées aux balais (26) se situent à l'extérieur du secteur du porte-balais (28) occupé par les balais.

4. Machine à courant continu selon l'une quelconque des revendications précédentes, **caractérisée en ce qu'**au moins deux bobines d'antiparasitage (30, 31) et au moins un condensateur d'antiparasitage (32) ainsi que leurs lignes de raccordement (36, 38) sont disposés à l'extérieur du secteur du porte-balais (28) occupé par les balais (26).

5. Machine à courant continu selon l'une quelconque des revendications précédentes, **caractérisée en ce que** l'enroulement d'arbre (23) du rotor (20) est réalisé sous forme d'enroulement à dent unique.
